Europäisches Patentamt

(19) European Patent Office

Office européen des brevets

(11) Numéro de publication : **0 330 584 B1**

# (12) FASCICULE DE BREVET EUROPEEN

(45) Date de publication du fascicule du brevet :
**22.01.92 Bulletin 92/04**

(51) Int. Cl.⁵ : **E21B 17/01,** E21B 43/01,
F16L 1/12

(21) Numéro de dépôt : **89400532.1**

(22) Date de dépôt : **24.02.89**

(54) **Dispositif de transfert de fluide entre le fond sous-marin et la surface.**

(30) Priorité : **24.02.88 FR 8802238**

(43) Date de publication de la demande :
**30.08.89 Bulletin 89/35**

(45) Mention de la délivrance du brevet :
**22.01.92 Bulletin 92/04**

(84) Etats contractants désignés :
**DE ES FR GB IT NL**

(56) Documents cités :
**EP-A- 0 145 214
EP-A- 0 251 488
DE-A- 821 629
FR-A- 2 507 672
US-A- 3 204 708
US-A- 3 650 114
US-A- 4 400 110**

(73) Titulaire : **COFLEXIP
23 Avenue de Neuilly
F-75116 Paris (FR)**

(72) Inventeur : **Maloberti, René
20, rue Dagobert
F-94130 Nogent sur Marne (FR)**
Inventeur : **Narzul, Patrick
17 Résidence Elysées 1
F-78170 la Celle Saint Cloud (FR)**

(74) Mandataire : **Nony, Michel et al
Cabinet NONY & CIE, 29, rue Cambacérès
F-75008 Paris (FR)**

EP 0 330 584 B1

## Description

La présente invention est relative à un dispositif de transfert de fluide entre le fond sous-marin et la surface et notamment un dispositif pour la collecte et la remontée de pétrole produit par un gisement sous-marin, et plus précisément un tel dispositif utilisant au moins une conduite tubulaire flexible.

La société déposante fabrique et commercialise depuis de nombreuses années, en grandes longueurs, des conduites tubulaires flexibles a hautes performances, utilisées pour équiper les champs pétrolifères sous-marins, notamment pour la collecte et la remontée du pétrole à partir de têtes de puits ou autres structures, telles que des organes de raccordement (manifolds), situées sur le fond sous-marin jusqu'à un support de surface tel qu'une plate-forme de production, par exemple flottante, semi-submersible ou haubannée, ou un navire.

Différentes configurations ont été proposées et mises en oeuvre pour ces conduites tubulaires flexibles entre le fond sous-marin, notamment la tête de puits et le support de surface.

Ces différentes configurations ont été décrites dans un document intitulé "Flexible production riser system for floating production application in the North Sea" par MAHONEY et BOUVARD (Document OTC 5163) rendant compte d'une conférence présentée à la 18ème "Offshore Technology Conference" à Houston, Texas, du 5 au 8 Mai 1986, et plus récemment dans un document intitulé "Recommended Pratice for Design and Operation of Subsea Production System" (API Recommended Pratice 17A) 1ère édition, 1er Septembre 1987 publié par l'American Petroleum Institute.

On utilise ainsi pour de tels dispositifs de production et de remontée de pétrole des configurations illustrées à la page 67 du document API et connues sous le nom de "LAZY S" ou "LAZY WAVE" et respectivement "STEEP S" ou "STEEP WAVE".

Dans ces configurations les conduites flexibles s'étendent en chaînette entre le support de surface et un organe intermédiaire à flottabilité positive apte à communiquer à la conduite sur une partie de sa longueur une configuration courbe de concavité tournée vers le fond.

L'organe intermédiaire peut être une arche de concavité tournée vers le fond sous-marin, le cas échéant reliée au fond sous-marin par des tirants, un ensemble d'éléments à flottabilité positive (bouées) disposés en succession et fixés sur la conduite, ou encore comme décrit dans "OFFSHORE ENGINEER" de Février 1985 à la page 31, et dans EP-A-0251488, une bouée à flottabilité positive reliée par des tirants au fonds sous-marin. Dans cette dernière configuration, la concavité de la conduite en dessous de la bouée est dirigée vers la tête de puits ou la structure située sur le fonds et à partir de laquelle le pétrole doit être remonté.

Dans la configuration "LAZY S" ou "LAZY WAVE" la partie de la conduite en dessous de l'organe intermédiaire présente une configuration en forme de chaînette jusqu'au niveau du fond sous-marin, la conduite s'étendant alors sur le fond sous-marin jusqu'à une tête de puits ou à un organe de raccordement situé sur le fond.

Une telle configuration, notamment dans le cas le plus fréquent où le support de surface est à la verticale de la tête de puits, augmente la longueur de conduite nécessaire entre la tête de puits et le support de surface et surtout présente un encombrement important au niveau du fond sous-marin pouvant conduire à des problèmes inextricables dans le cas d'un grand nombre de conduites ou de faisceaux de conduites.

Dans la configuration "STEEP S" ou "STEEP WAVE" la partie de conduite entre l'organe intermédiaire et le fond sous-marin est tendue, l'extrémité inférieure de la conduite étant fixée à une embase reposant sur le fond.

Le schéma simplifié d'une telle embase est illustré à la figure 9 du document OTC mentionné ci-dessus.

Dans ce type de configuration, il est nécessaire de raccorder chacune des conduites de remontée à l'embase installée préalablement et de connecter à cette embase la ou les conduites provenant de la tête de puits (cf figure 11 du document OTC).

Cette solution nécessite la construction et la mise en place d'embases lourdes de grandes dimensions munies de systèmes de connexion. En outre dans les configurations antérieures, les opérations de connexion doivent être réalisées par des plongeurs, ce qui complique nécessairement la mise en place et limite les profondeurs d'utilisation, à moins d'utiliser des équipements spéciaux de raccordement automatique télécommandés, coûteux, complexes et difficilement disponibles, comme par exemple ceux décrits dans EP-A-0251488.

La présente invention se propose de fournir un dispositif évitant aussi bien les inconvénients de la configuration "LAZY S" ou "LAZY WAVE" que ceux des configurations "STEEP S" ou "STEEP WAVE" et ce, par des moyens particulièrement simples et économiques, notamment lors de l'installation, tout en réalisant une liaison continue entre la tête de puits et le support de surface, (à l'exception, le cas échéant, de simples embouts dans la longueur de la conduite) l'ensemble de la conduite se trouvant sensiblement dans un même plan vertical.

Le dispositif selon l'invention se rapproche du type "STEEP S" ou "STEEP-WAVE" en ce sens qu'une partie de la conduite en dessous de l'organe intermédiaire est maintenue en tension en étant reliée à un point fixe sur le fond sous-marin et se caractérise essentiellement par le fait qu'il comprend des moyens de retenue d'au moins une zone de la partie inférieure de la conduite, reliés audit point fixe et agencés pour maintenir en tension la partie de la conduite située entre l'organe intermédiaire et les moyens de retenue et communiquer à la conduite dans un plan vertical, une courbure imposée prédéterminée dont la concavité est dirigée en direction de la tête de puits ou de la structure située sur le fond et à partir de laquelle le pétrole doit être remonté.

Dans un mode de réalisation préféré, lesdits moyens de retenue comprennent au moins un collier mis en place autour de la conduite, entre l'organe intermédiaire et le fond, ledit collier, destiné à reprendre la traction de la conduite, étant relié par au moins un tirant d'ancrage au point fixe, réalisé de préférence sous forme de corps-mort disposé sur le fond sous-marin. De préférence, il est prévu deux tirants fixés sensiblement en un même point sur le corps-mort, divergeant vers le haut à partir de celui-ci et reliés chacun à l'un des deux éléments d'axe alignés en saillie dudit collier. Cette disposition présente l'avantage d'éviter toutes tractions déviées à la conduite au niveau du collier dans le cas d'un déplacement de la conduite hors d'un plan vertical, notamment sous l'effet de courants traversiers.

De préférence, les éléments d'axe sont montés sur une partie annulaire extérieure entourant une partie centrale du collier assurant le serrage de la conduite et la reprise de la tension, ladite partie annulaire extérieure étant montée autour de ladite partie centrale dans une position d'orientation déterminée.

Dans ce mode de réalisation, il est avantageux également de mettre en place sur la conduite, dans sa partie horizontale au niveau du fond sous-marin, au moins un second collier relié également par un ou plusieurs tirants au corps-mort.

On doit comprendre que le corps-mort selon l'invention est très différent de l'embase prévue dans les configurations "STEEP S" et "STEEP-WAVE" dans la mesure où il présente de faibles dimensions, est facile à réaliser et à immerger, et ne comprend aucun moyen de connexion de conduites, la conduite selon l'invention étant parfaitement continue entre la tête de puits et le support de surface.

D'autres moyens de retenue peuvent être prévus selon l'invention, tels que par exemple des vertèbres articulées s'étendant depuis le corps-mort sur une partie de la longueur de la partie inférieure de la conduite, la conduite étant alors fixée au corps-mort. Dans un autre mode de réalisation, ces moyens de retenue peuvent consister en une goulotte solidaire du corps-mort réalisant une retenue et un guidage dans un plan vertical de la partie correspondante de la conduite.

Dans le but de mieux faire comprendre l'invention on va maintenant en décrire en se référant au dessin annexé des exemples de réalisation nullement limitatifs.

— la figure 1 est une vue schématique illustrant un premier mode de mise en oeuvre du dispositif selon l'invention,
— la figure 2 est une vue partielle en élévation latérale du dispositif illustré à la figure 1,
— la figure 3 est une vue arrière correspondant à la figure 2 illustrant deux positions de la conduite,
— la figure 4 est une vue analogue à la figure 2 illustrant les positions extrêmes de la partie correspondante de la conduite,
— la figure 5 est une vue en élévation, en demi-coupe d'une forme de réalisation du collier du mode de réalisation des figures 1 à 4,
— la figure 6 est une vue partielle schématique en élévation latérale d'un second mode de mise en oeuvre, et
— la figure 7 est une vue partielle schématique en élévation latérale d'un troisième mode de mise en oeuvre.

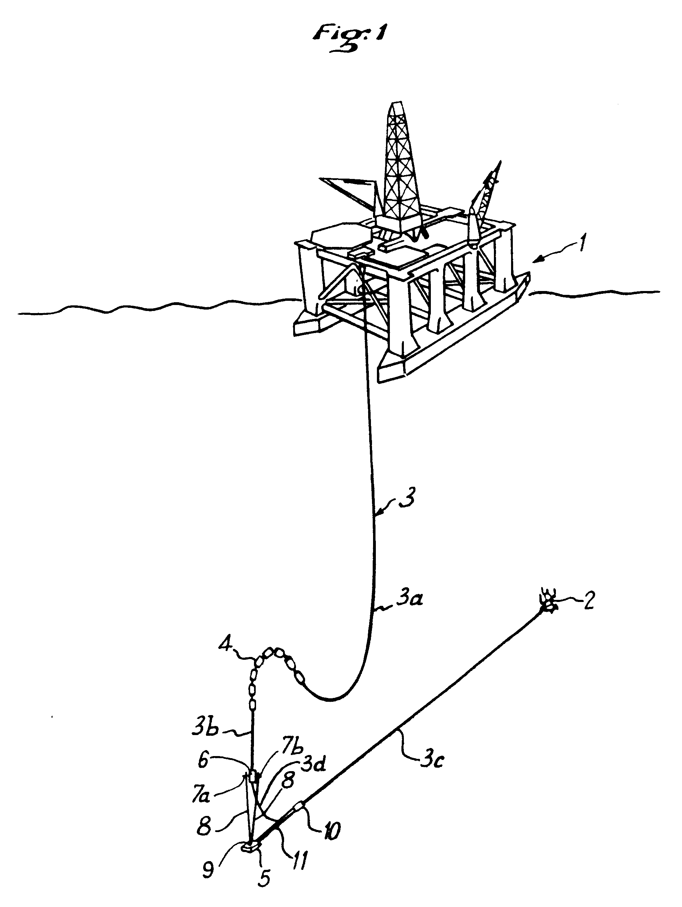

On se réfère tout d'abord aux figures 1 à 4.

Le dispositif selon l'invention s'étend entre un support de surface 1 représenté ici sous la forme d'une plate-forme semi-submersible de production et une tête de puits 2 située sur le fond sous-marin sensiblement à la verticale de la plate-forme 1.

Pour illustrer l'invention on a représenté le dispositif sous la forme d'une conduite flexible unique 3 pour la remontée du pétrole mais on doit bien comprendre que dans la pratique, sur un champ pétrolifère, il est prévu un grand nombre de telles conduites disposées en faisceaux.

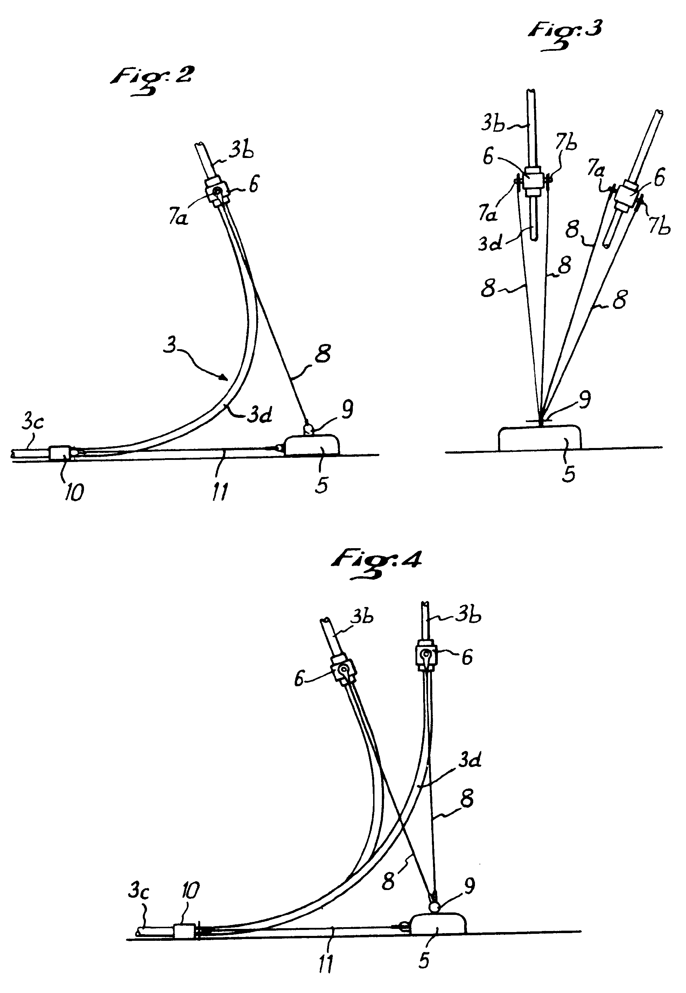

La configuration illustrée sur la figure 1 pour la conduite 3 ressemble au type "STEEP WAVE" en ce sens qu'il est prévu en un point situé entre le fond et la surface, autour de la conduite, un organe intermédiaire 4 sous la forme d'un ensemble d'éléments à flottabilité positive (bouées), disposés en succession et conférant à la conduite 3, sur une partie de sa longueur, une configuration courbe à concavité tournée vers le fond. L'organe 4 représenté pourrait être remplacé par une arche, comme illustré à la figure 4 du document OTC mentionné précédemment, ou par une bouée fixée au fond par des tirants comme dans EP-A-0251488.

La partie de conduite 3a entre la zone définie par l'organe intermédiaire 4 et le support de surface 1, présente une configuration en chaînette, tandis que la partie de conduite 3b en dessous de l'organe 4 est tendue en étant fixée à un corps-mort 5 disposé sur le fond sous-marin comme cela va être décrit ci-après.

Comme on le voit le mieux sur les figures 2 à 4, il est prévu autour de la conduite un collier 6 serré autour de la conduite, le collier comportant deux éléments d'axe alignés opposés 7a, 7b sur chacun desquels est fixé un tirant d'ancrage 8 reliant le collier 6 au corps-mort 5. Comme on le voit notamment sur la figure 3, il est prévu deux tirants d'ancrage 8 fixés en un point unique 9 à la partie supérieure du corps-mort 5.

Cette réalisation permet d'une part d'aligner la traction de la conduite sur la résultante des tractions dans les tirants, et d'autre part, lors d'une déviation de la conduite, (illustrée sur la figure 3) provoquée par exemple par des courants traversiers, de conserver un alignement axial de la conduite de part et d'autre du collier de serrage 6, empêchant ainsi un décalage axial qui pourrait se produire par exemple avec deux tirants d'ancrage parallèles.

Pour le positionnement de la conduite il est prévu dans l'exemple illustré un second collier de serrage 10 sur la partie horizontale 3c de la conduite entre son point de contact avec le fond sous-marin et la tête de puits, le collier 10 étant relié par un tirant 11 au corps-mort 5.

La disposition selon l'invention permet, comme on le voit le mieux sur la figure 2, de conférer à la conduite 3 dans sa partie 3d située entre le collier 6 et le fond, une courbure imposée dans un plan vertical et dont la concavité, comme on le voit sur la figure 1, est tournée en direction de la tête de puits. La conduite 3 est alors parfaitement continue entre sa partie 3b et sa partie 3c, sans aucun tronçon intermédiaire coudé nécessitant des opérations successives de connexion comme dans les cas des configurations connues de type "STEEP S" ou "STEEP WAVE".

Dans le cas où pour des questions de longueur de conduite, par exemple, on souhaite prévoir une liaison par embouts de longueurs partielles de conduite, les deux embouts connectés peuvent constituer le moyen de retenue de conduite au sens de l'invention et assurer ainsi la fonction du collier 6 en étant reliés par des tirants au corps-mort 5.

Le rayon de courbure imposé est bien entendu déterminé en fonction du diamètre de la conduite et des conditions d'utilisation. On comprend que, selon l'invention, du fait de la configuration incurvée de la conduite dans un plan vertical, la longueur de la conduite entre le fond et la surface est réduite au minimum admissible et l'on ne trouve aucun tronçon de conduite formant des boucles inutiles sur le fond sous-marin, comme cela est le cas dans des configurations de type "LAZY S" ou "LAZY WAVE".

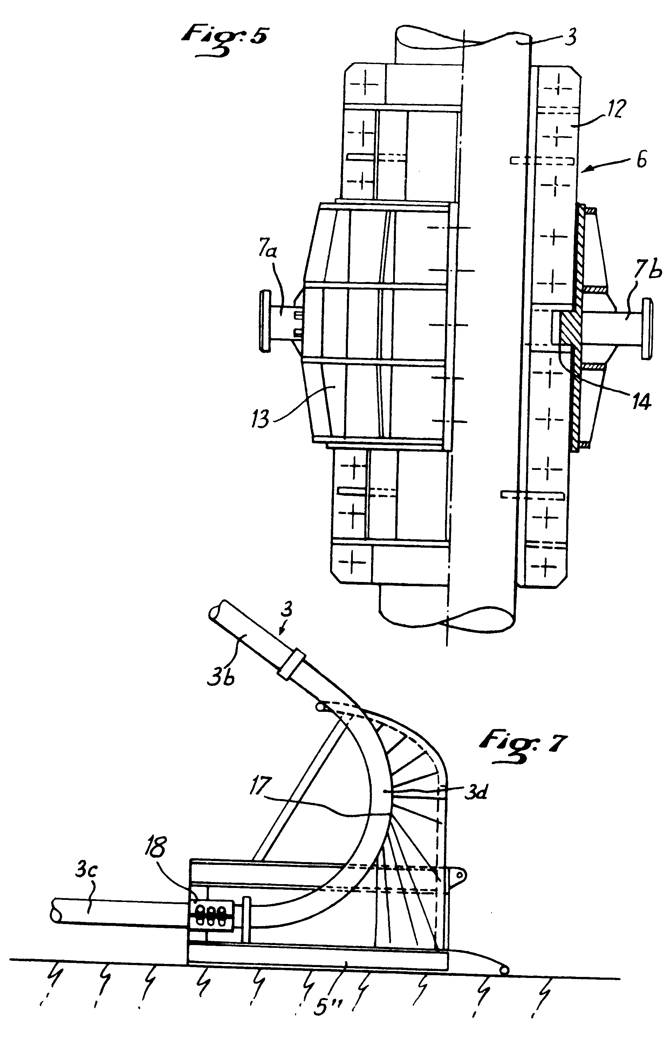

Dans la forme de réalisation de la figure 5, le collier 6 est orientable et comprend une partie centrale 12 formant manchon cylindrique autour de la conduite flexible 3 et assurant un effet de serrage tel que la tension dans la conduite flexible 3 peut être reprise par le collier 6, et une partie annulaire extérieure 13 réalisée de façon à pouvoir être positionnée dans une gorge 14 de la partie 12 entourant la conduite 3. Une telle disposition permet d'assurer facilement, lors de l'installation du dispositif, l'orientation des éléments d'axes alignés 7a et 7b perpendiculairement au plan dans lequel s'inscrit la conduite flexible 3.

La mise en place du dispositif peut se faire en une seule opération, rapidement et facilement, sans connexion à faire au fond (autre que celle éventuelle de la partie horizontale 3c de la conduite sur la tête de puits 2), sans l'intervention de plongeurs et sans avoir à utiliser des dispositifs de connexion automatique télécommandés, lesquels sont complexes, coûteux, et d'une disponibilité non assurée. L'opération ne requiert pas d'autre navire d'intervention que le navire utilisé pour poser les conduites flexibles concernées, et pas d'autres équipements particuliers que ceux qui se trouvent normalement à bord d'un tel navire. On peut, par exemple, descendre le corps-mort 5 en même temps que la conduite flexible 3, avec les tirants 8 et 11 en place reliant le corps-mort 5 aux colliers 6 et 10, et tenir ainsi le corps-mort 5 suspendu par l'intermédiaire du flexible 3, et achever l'opération en posant le corps-mort 5 à l'endroit prescrit sur le fond, sa position étant repérée depuis la surface par des moyens connus tels que des systèmes de localisation acoustiques. Dans le cas où le collier 6 est orientable, on utilise pour vérifier et corriger l'orientation des éléments d'axe 7a et 7b un robot sous-marin télécommandé, équipé d'une caméra de télévision et d'un bras léger muni d'une pince, ainsi que des propulseurs et divers autres instruments. Ces robots, qu'on appelle couramment R.O.V. et dont il existe divers modèles connus, sont disponibles à bord des navires utilisés pour la pose des conduites flexibles, étant par ailleurs nécessaires pour diverses tâches de contrôle de l'installation sous-marine.

Dans l'exemple de réalisation de la figure 6, la conduite 3 traverse un corps-mort 5' disposé sur le fond sous-marin, la courbure dans le plan vertical étant communiquée par un ensemble de vertèbres articulées 15 encastré à son extrémité inférieure dans le corps-mort 5'. De telles vertèbres 15 sont bien connues dans la technique pétrolière offshore pour limiter un rayon de courbure et ne seront pas décrites plus en détail ici. La conduite est retenue dans le corps-mort 5' par l'intermédiaire d'un collier 16.

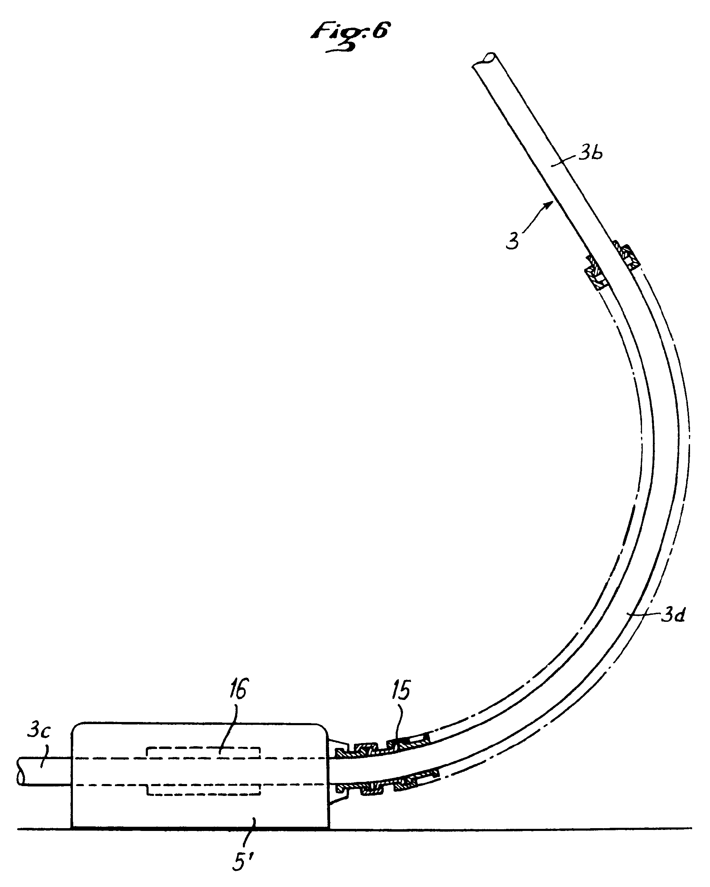

Dans l'exemple de réalisation de la figure 7 le corps-mort 5" comporte un organe 17 formant goulotte de retenue et de guidage de la conduite, la goulotte étant conformée pour conférer à la conduite 3 la courbure prédéterminée souhaitée dans son plan vertical, la conduite 3 étant retenue par un collier 18.

**Revendications**

1. Dispositif de transfert de fluide entre le fond sous-marin et la surface notamment pour la collecte et la remontée de pétrole produit par un gisement sous-marin comportant au moins une conduite tubulaire flexible s'étendant en chaînette entre un support de surface et un organe intermédiaire communiquant à la conduite sur une partie de sa longueur une configuration courbe de concavité tournée vers le fond, une partie de la conduite entre ledit organe intermédiaire et le fond sous-marin étant tendue en étant fixée à un point fixe sur le fond, caractérisé par le fait qu'il comprend des moyens (6 ; 15, 16 ; 17, 18) de retenue d'au moins une zone de la partie inférieure de la conduite (3), reliés au point fixe, constitué de préférence par un corps mort (5, 5′, 5″) et agencés pour maintenir en tension la partie (3b) de la conduite située entre l'organe intermédiaire (4) et les moyens de retenue, et pour communiquer à la conduite dans un plan vertical une courbure imposée prédéterminée dont la concavité est dirigée vers la structure, notamment une tête de puits (2), située sur le fond sous-marin et à partir de laquelle le pétrole doit être remonté.

2. Dispositif selon la revendication 1, caractérisé par le fait que lesdits moyens de retenue comprennent au moins un collier (6) mis en place autour de la conduite, entre l'organe intermédiaire (4) et le fond, ledit collier étant relié par au moins un tirant d'ancrage (8) au corps-mort (5)

3. Dispositif selon la revendication 2, caractérisé par le fait qu'il comprend deux tirants (8) fixés sensiblement en un même point (9) sur le corps-mort (5), divergeant vers le haut à partir de celui-ci, et reliés chacun à l'un de deux éléments d'axe (7a, 7b) alignés en saillie dudit collier (6).

4. Dispositif selon l'une quelconque des revendications 2 et 3, caractérisé par le fait que les éléments d'axe (7a, 7b) sont montés sur une partie annulaire extérieure (13) du collier (6) entourant une partie centrale (12) dudit collier, assurant le serrage de la conduite (3) et la reprise de la tension de celle-ci, ladite partie annulaire extérieure (13) étant montée autour de ladite partie centrale (12) dans une position d'orientation déterminée.

5. Dispositif selon l'une quelconque des revendications 2 à 4, caractérisé par le fait qu'il comporte autour de la conduite, dans sa partie horizontale (3c) au niveau du fond sous-marin, au moins un second collier (10) relié par au moins un tirant (11) au corps-mort (5).

6. Dispositif selon la revendication 1, caractérisé par le fait que lesdits moyens de retenue comprennent un ensemble de vertèbres articulées (15) s'étendant depuis le corps-mort (5′) sur une partie de la longueur de la partie inférieure de la conduite, la conduite étant fixée notamment par un collier (16) audit corps-mort (5′).

7. Dispositif selon la revendication 1, caractérisé par le fait que lesdits moyens de retenue comprennent une goulotte (17) solidaire du corps-mort (5″) réalisant une retenue et un guidage dans le plan vertical de la partie correspondante de la conduite, ladite conduite (3) étant retenue dans ledit corps-mort (5″), notamment par un collier (18).

8. Dispositif selon l'une quelconque des revendications précédentes, caractérisé par le fait que la conduite (3) est continue entre le support de surface (1) et la structure, notamment une tête de puits (2) située sur le fond sous-marin et à partir de laquelle le pétrole doit être remonté.

9. Dispositif selon l'une quelconque des revendications précédentes, caractérisé par le fait que l'organe intermédiaire (4) est constitué d'un ensemble d'éléments à flottabilité positive fixés sur la conduite, espacés sur la longueur de celle-ci.

## Claims

1. A device for transferring fluid between the ocean bed and the surface in particular for collecting and raising petroleum produced by an under-sea deposit comprising at least one flexible tube extending in the form of a catenary curve between a surface support and an intermediate member conferring the pipe over a part of its length with a curved configuration, the concave portion of which faces the ocean bed, a part of the pipe between the said intermediate member and the ocean bed being held taut by being attached to a fixed point on the ocean bed, characterised in that it comprises means (6 ; 15, 16 ; 17, 18) of restraining at least one zone of the said lower part of the pipe (3), connected to the fixed point, which is preferably formed by a deadman (5, 5′, 5″), and arranged so as to keep taut that part (3b) of the pipe located between the intermediate member (4) and the restraining means and so as to confer the pipe in a vertical plane with a predetermined applied curvature, the concave portion of which faces the structure, in particular a well head (2) situated on the ocean bed an from which the petroleum must be raised.

2. A device as claimed in Claim 1, characterised in that the said restraining means comprise at least one collar (6) positioned around the pipe between the intermediate member (4) and the ocean bed, the said collar being connected to the deadman (5) by at least one guy (8).

3. A device as claimed in Claim 2, characterised in that it comprises two guys (8) attached substantially at one and the same point (9) to the deadman (5), diverging upwards from the deadman and each connected to one of two aligned trunnion elements (7a, 7b) projecting from the said collar (6).

4. A devise as claimed in one of the Claims 2 and 3, characterised in that the trunnion elements (7a, 7b) are mounted on an external annular part (13) of the collar (6) surrounding a central part (12) of the said collar, ensuring the clamping of the pipe (3) and the taking up of the tension of the pipe, the said external annular part (13) being mounted around the said central part (12) in a determined position of orientation.

5. A device as claimed in one of the Claims 2 to 4, characterised in that around the pipe, in the horizontal part (3c) thereof, at the level of the ocean bed it comprises at least one second collar (10) connected to the deadman (5) by at least one guy (11).

6. A device as claimed Claim 1, <u>characterised in that</u> the said restraining means comprise an assembly of articulated vertebrae (15) extending from the deadman (5') over part of the length of the lower part of the pipe, the pipe being fixed to the deadman (5') in particular by a collar (16).

7. A device as claimed Claim 1, <u>characterised in that</u> the said restraining means comprise a chute (17) which is rigidly connected to the deadman (5") providing restraint and guidance in the vertical plane of the corresponding part of the pipe, the said pipe (3) being restrained in the said deadman (5") in particular by a collar (18).

8. A device as claimed in one of the preceding Claims, <u>characterised in that</u> the pipe (3) is continuous between the surface support (1) and the structure, in particular a well head (2) situated on the ocean bed and from which the petroleum must be raised.

9. A device as claimed in one of the preceding Claims, <u>characterised in that</u> the intermediate member (4) is formed by an assembly of positive buoyancy elements attached to the pipe and spaced along the length thereof.

## Patentansprüche

1. Vorrichtung zum Leiten einer Flüssigkeit zwischen dem Meeresboden und der Oberfläche, im besonderen zum Sammeln und Nach-Oben-Fördern von aus einer Unterwasserlagerstätte gewonnenem Erdöl mit wenigstens einer biegsamen Rohrleitung, die als Kettenlinie zwischen einer Oberflächenhalterung und einem Zwischenelement verläuft, das der Leitung an einem Teil ihrer Länge eine gekrümmte Ausgestaltung mit zum Boden gerichteter Konkavität verleiht, wobei ein Teil der Leitung zwischen dem Zwischenelement und dem Meeresboden gespannt und gleichzeitig an einem festen Punkt am Boden fixiert ist, **dadurch gekennzeichnet**, daß sie Haltemittel (6; 15, 16 ; 17, 18) an wenigstens einem Abschnitt des unteren Teils der Leitung (3) aufweist, die mit dem festen Punkt verbunden sind, der bevorzugt als eine Vertäuboje (5, 5', 5") ausgebildet ist, und die so ausgelegt sind, daß sie den Teil (3b) der Leitung gespannt halten, der sich zwischen dem Zwischenelement (4) und den Haltemitteln befindet, und der Leitung in einer vertikalen Ebene eine vorbestimmte auferlegte Krümmmung verleihen, deren Konkavität zu der Struktur, einem Schachtkopf (2) im besonderen gerichtet ist, der sich auf dem Meeresboden befindet und von dem das Erdöl nach oben gefördert werden soll.

2. Vorrichtung nach Anspruch 1, **dadurch gekennzeichnet**, daß die Haltemittel wenigstens eine Schelle (6) aufweisen, die um die Leitung, zwischen dem Zwischenelement (4) und dem Boden, gelegt ist, wobei die Schelle mittels wenigstens eines Zugankers (8) mit der Vertäuboje (5) verbunden ist.

3. Vorrichtung nach Anspruch 2, **dadurch gekennzeichnet**, daß sie zwei Zuganker (8) aufweist, die deutlich an ein und demselben Punkt (9) an der Vertäuboje (5) befestigt sind, wobei sie von dieser nach oben auseinanderlaufen, und die jeweils mit einem der zwei Achsenelemente (7a, 7b) verbunden sind, die von der Schelle (6) vorstehend ausgerichtet sind.

4. Vorrichtung nach einem der Ansprüche 2 und 3, **dadurch gekennzeichnet**, daß die Achsenelemente (7a, 7b) an einem ringförmigen Außenteil (13) der Schelle (6) montiert sind, der einen zentralen Teil (12) der Schelle umgibt, wobei er das Einklemmen der Leitung (3) und die Wiederherstellung ihrer Spannung sicherstellt, und wobei der ringförmige Außenteil (13) um den zentralen Teil (12) in einer Stellung mit festgelegter Ausrichtung montiert ist.

5. Vorrichtung nach einem der Ansprüche 2 bis 4, **dadurch gekennzeichnet**, daß sie um die Leitung in ihrem horizontalen Teil (3c) auf dem Niveau des Meeresboden wenigstens eine zweite Schelle (10) aufweist, die mittels wenigstens einer Strebe (11) mit der Vertäuboje (5) verbunden ist.

6. Vorrichtung nach Anspruch 1, **dadurch gekennzeichnet**, daß die Haltemittel einen Satz gelenkiger Wirbel (15) aufweisen, die sich von der Vertäuboje (5') auf einem Teil der Länge des unteren Teils der Leitung erstrecken, wobei die Leitung im besonderen durch eine Schelle (16) an der Vertäuboje (5') befestigt ist.

7. Vorrichtung nach Anspruch 1, **dadurch gekennzeichnet**, daß die Haltemittel eine einstückige Schurre (17) der Vertäuboje (5") aufweisen, die eine Halterung und Führung in der vertikalen Ebene des entsprechenden Teils der Leitung realisiert, wobei die Leitung (3) an der Vertäuboje (5") im besonderen durch eine Schelle (18) gehalten wird.

8. Vorrichtung nach einem der vorhergehenden Ansprüche, **dadurch gekennzeichnet**, daß die Leitung (3) zwischen dem Oberflächenträger (1) und der Struktur durchgängig ist, die im besonderen ein Schachtkopf (2) ist, der sich auf dem Meeresboden befindet, und von dem aus das Erdöl nach oben gefördert werden soll.

9. Vorrichtung nach einem der vorhergehenden Ansprüche, **dadurch gekennzeichnet**, daß das Zwischenelement (4) von einem Satz aus Elementen gebildet ist, die deutlich schwimmfähig und an der Leitung befestigt sind, wobei sie auf ihrer Länge mit Zwischenraum angeordnet sind.

Fig. 1

Fig. 2

Fig. 3

Fig. 4

*Fig. 5*

*Fig. 7*

Fig:6